# EUROPEAN PATENT APPLICATION

(11) **EP 2 515 076 A1**
(43) Date of publication of application: **24.10.2012**
(21) Application number: 09852291.5
(22) Date of filing: 17.12.2009
(51) Int. Cl.: G01C 19/56, G01P 9/04

(54) **ANGULAR VELOCITY DETECTION DEVICE**

(71) Applicant: Toyota Jidosha Kabushiki Kaisha, Toyota-shi, Aichi 471-8571 (JP)
(72) Inventor: YAMAOKA, Hidehiko, Toyota-shi Aichi 471-8571 (JP)
(74) Representative: TBK
(86) International application number: PCT/JP2009/071058
(87) International publication number: WO 2011/074099

(57) **Abstract**

An angular velocity detecting apparatus includes a sensor chip having an angular velocity sensor installed therein, wherein the angular velocity sensor includes two mass elements which are driven in a drive direction in opposite phase with each other, and detects an angular velocity based on an oscillation of the mass elements in a direction perpendicular to the drive direction, the angular velocity detecting apparatus comprising: two acceleration sensors provided on the sensor chip, each of the acceleration sensors having a mass element which can oscillate in a single axis direction in a plane parallel to a substrate surface of the sensor chip, wherein the acceleration sensors are arranged in such a positional relationship that the mass elements of the acceleration sensors are oscillated in opposite phase with each other at the time of a rotational vibration of the sensor chip while the mass elements of the acceleration sensors are oscillated in phase with each other at the time of a translational vibration of the sensor chip.

## Description

### TECHNICAL FIELD

The present invention is related to an angular velocity detecting apparatus which includes a sensor chip having an angular velocity sensor installed therein, wherein the angular velocity sensor includes two mass elements which are driven in a drive direction in opposite phase with each other, and detects an angular velocity based on an oscillation of the mass elements in a direction perpendicular to the drive direction.

### BACKGROUND ART

JP 3512004 B discloses this kind of an angular velocity detecting apparatus. The disclosed angular velocity detecting apparatus has two mass elements disposed symmetrically which are excited to oscillate in a first direction in opposite phase with each other and are oscillated to displace in a second direction perpendicular to the first direction in opposite phase with each other by a Coriolis force according to an angular velocity. A displacement difference between the mass elements (i.e., difference in a displacement position including an oscillation direction in the second direction) is detected, and the angular velocity around a predetermined axis perpendicular to the first and second directions is detected based on the displacement difference. Further, JP 3037774 B discloses this kind of an angular velocity detecting apparatus in which a damping apparatus is provided which includes a housing part in which oscillators are housed; a support part for supporting the housing; and an elastic body disposed on a base member for supporting the support part, wherein a characteristic frequency of the damping apparatus in a direction of the Coriolis force or a direction of the oscillation of the oscillators is set smaller than a characteristic frequency of the damping apparatus around an angular velocity input axis.

In this kind of an angular velocity detecting apparatus, the angular velocity is detected based on the displacement difference between the mass elements which are oscillated to displace in opposite phase with each other when the angular velocity is generated. In such a configuration, when the mass elements are oscillated to displace in phase with each other due to a disturbance vibration, etc., there is substantially no displacement difference between the mass elements. Thus, an influence of the disturbance on the detection of the angular velocity is eliminated and an erroneous detection of the angular velocity can be prevented as much as possible.

However, when the sensor chip itself is oscillated to rotate at a drive oscillation frequency, a status is formed where the mass elements are oscillated symmetrically (oscillated to displace in opposite phase) due to an angular acceleration at that time as if the Coriolis force at the time of the generation of the angular velocity would be acting. Such a status causes detection accuracy of the angular velocity in this kind of an angular velocity detecting apparatus to become worse.

### SUMMARY OF INVENTION

Therefore, an object of the present invention is to provide an angular velocity detecting apparatus which can remove error factors due to such a rotational vibration of the sensor chip.

In order to achieve the aforementioned objects, according to the first aspect of the present invention, an angular velocity detecting apparatus is provided which includes a sensor chip having an angular velocity sensor installed therein, wherein the angular velocity sensor includes two mass elements which are driven in a drive direction in opposite phase with each other, and detects an angular velocity based on an oscillation of the mass elements in a direction perpendicular to the drive direction. The angular velocity detecting apparatus includes two acceleration sensors provided on the sensor chip, each of the acceleration sensors having a mass element which can oscillate in a single axis direction in a plane parallel to a substrate surface of the sensor chip, wherein the acceleration sensors are arranged in such a positional relationship that the mass elements of the acceleration sensors are oscillated in opposite phase with each other at the time of a rotational vibration of the sensor chip while the mass elements of the acceleration sensors are oscillated in phase with each other at the time of a translational vibration of the sensor chip.

According to the present invention, it is possible to obtain an angular velocity detecting apparatus which can remove error factors due to the rotational vibration of the sensor chip.

### BRIEF DESCRIPTION OF DRAWINGS

Fig. 1 is a main cross-sectional view of an electronic component installed package 10 in which an angular velocity detecting apparatus 1 according to an embodiment of the present invention is incorporated.
Fig. 2 is a top view of a schematically illustrated main part of a sensor chip 60 in the electronic component installed package 10 in Fig. 1.
Fig. 3 is a diagram for illustrating a model of a yaw rate detection principle.
Fig. 4 is a diagram for illustrating characteristics of an oscillator (a mass element) of a yaw rate sensor.
Fig. 5 is a diagram for explaining a yaw rate detection principle used in a yaw rate detecting part 70 having a tuning fork structure.
Fig. 6 is a diagram in which (A) illustrates wave shapes when two mass elements are oscillated symmetrically and (B) illustrates wave shapes when two mass elements are oscillated in phase.
Fig. 7 is a block diagram of an example of the angular velocity detecting apparatus 1 which includes the sensor chip 60 illustrated in Fig. 2.
Fig. 8 is a diagram for illustrating wave shapes of signals generated in the angular velocity detecting apparatus 1 illustrated in Fig. 7 in which two acceleration sensors 90 and 92 have the same polarity.
Fig. 9 is a diagram for illustrating wave shapes of signals generated in the angular velocity detecting apparatus 1 in which two acceleration sensors 90 and 92 have opposite polarities.
Fig. 10 is a block diagram of another example of the angular velocity detecting apparatus 1 which includes the sensor chip 60 illustrated in Fig. 2.
Fig. 11 is a diagram for illustrating displacement signals of the mass elements 74a and 74b before and after correction by a correction driving part 49.
Fig. 12 is a diagram for illustrating wave shapes of signals generated in the angular velocity detecting apparatus 1 illustrated in Fig. 10.
Fig. 13 is a diagram for illustrating variations in which the yaw rate detecting part 70 of the sensor chip 60 does not have an acceleration detecting function.
Fig. 14 is a diagram for illustrating variations in which the yaw rate detecting part 70 of the sensor chip 60 has an acceleration detecting function.

### EXPLANATION FOR REFERENCE NUMBERS

- 1: angular velocity detecting apparatus
- 10: electronic component installed package
- 14: lead frame
- 16: lid member
- 17: package body
- 17a: internal space
- 32: wire
- 40: control IC chip
- 42: sensor excitation driving part
- 43: displacement detecting part
- 44: angular velocity signal processing part
- 45: Y axis acceleration signal processing part
- 46: displacement detecting part
- 47: chip rotation detection signal processing part
- 48: X axis acceleration signal processing part
- 49: correction driving part
- 50: cap substrate
- 60: sensor chip
- 70: yaw rate detecting part
- 71: driver spring
- 72: driver frame
- 74a,: 74b mass element
- 75: fixed portion
- 77: detection spring
- 78: link spring
- 90, 92: acceleration sensor
- 90a, 92a: mass element
- 94: third acceleration sensor
- 96: fourth acceleration sensor

### BEST MODE FOR CARRYING OUT THE INVENITON

In the following, the best mode for carrying out the present invention will be described in detail by referring to the accompanying drawings.

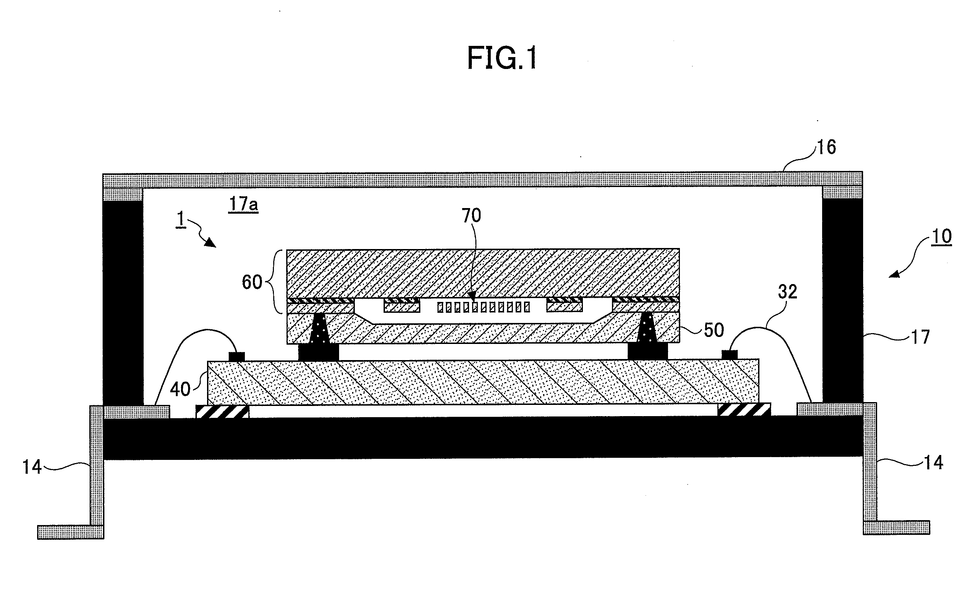

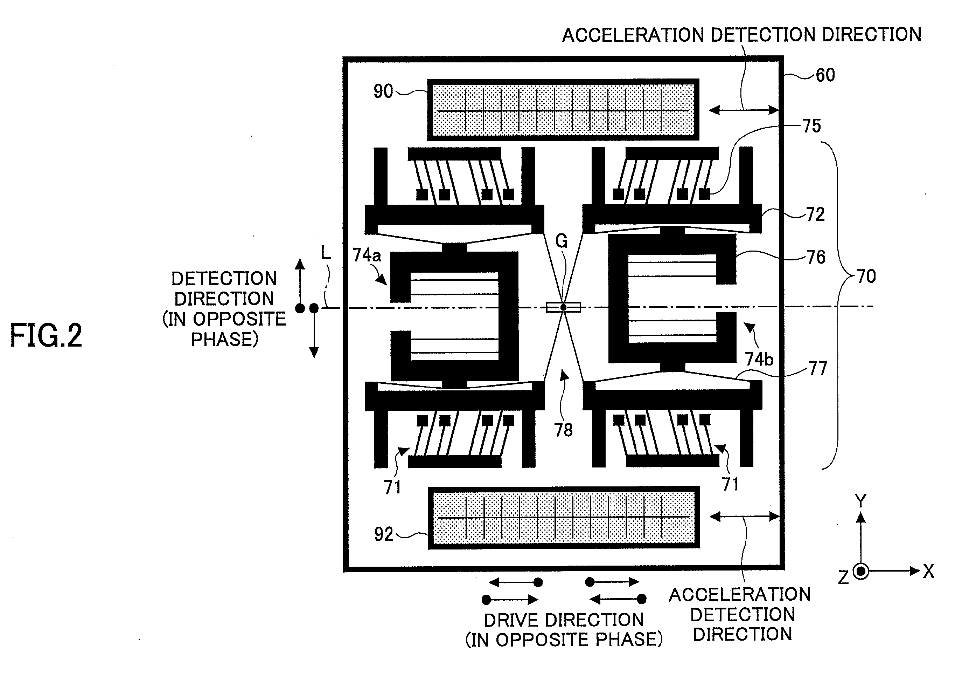

Fig. 1 is a main cross-sectional view of an electronic component installed package 10 in which an angular velocity detecting apparatus 1 according to an embodiment of the present invention is incorporated. Fig. 2 is a top view which schematically illustrates a main part of a sensor chip (sensor substrate) 60 according to the embodiment.

The electronic component installed package 10 includes a package body 17. The package body 17 has an internal space (cavity) 17a defined by a bottom part and side walls which extend in an upright direction from the bottom part. In the internal space 17a are housed various electronic components (for example, a sensor chip 60, a control IC chip 40 described hereinafter) of the angular velocity detecting apparatus 1. The upper side of the internal space 17a is open and is covered with a lid member 16. The package body 17 may be formed of any material such as ceramic materials and resin materials (epoxy resins, for example).

The package body 17 includes plural lead frames 14. The lead frames 14 are formed of an electrically conductive material. Electrodes of the control IC chip 40 and the lead frames 14 are electrically connected by bonding wires 32.

The lid member 16 is formed of an electrically conductive material (typically, a metal material). The lid member 16 may be grounded by a grounding structure (not shown) to implement a shielding function.

The angular velocity detecting apparatus 1 mainly includes the control IC chip 40, a cap substrate 50 and the sensor chip 60.

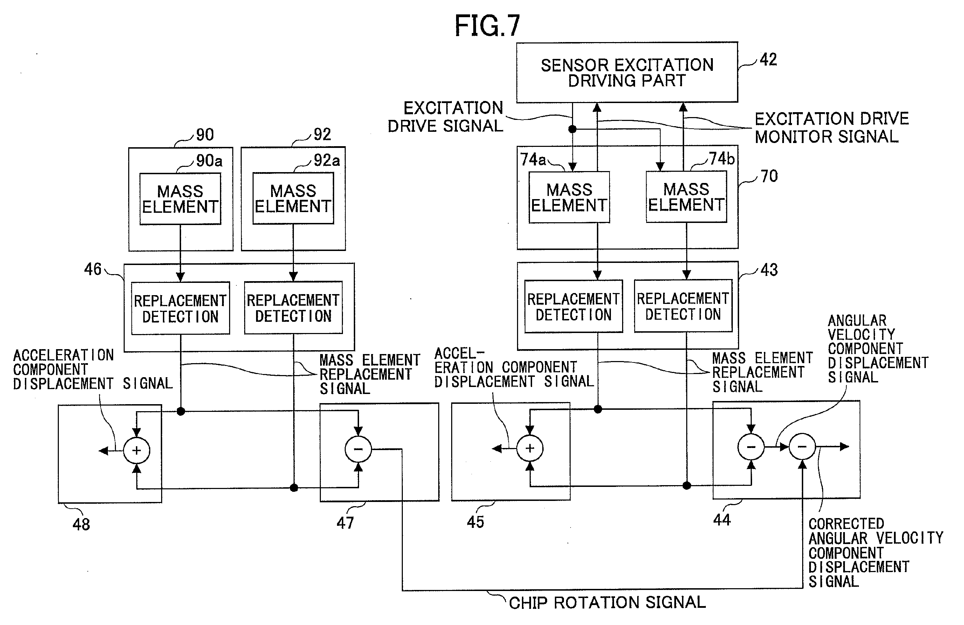

The control IC chip 40 is electrically connected to a yaw rate detecting part 70 and two acceleration sensors 90 and 92 of the sensor chip 60 (described hereinafter). The control IC chip 40 includes an IC which has a function of processing signals from the yaw rate detecting part 70 and the acceleration sensors 90 and 92 of the sensor chip 60, etc. The control IC chip 40 is connected to an external control device (not show) via the lead frames 14 and the bonding wires 32, when it is installed in the vehicle, for example. A main part of the control IC chip 40 is described later with reference to Fig. 7.

The cap substrate 50 is provided such that it covers the sensor chip 60 from the lower side to protect and seal movable portions such as the yaw rate detecting part 70 and the acceleration sensors 90 and 92, etc., of the sensor chip 60. Further, the cap substrate 50 may be connected to a constant potential such as ground in order to electrically protect the yaw rate detecting part 70 and the acceleration sensors 90 and 92 of the sensor chip 60. Specifically, the cap substrate 50 may have an electrical shielding function in order to ensure stable operations of the yaw rate detecting part 70 and the acceleration sensors 90 and 92 of the sensor chip 60. It is noted that the cap substrate 50 may be omitted.

The sensor chip 60 includes a substrate which has a side on which the yaw rate detecting part 70 described hereinafter is formed. In the illustrated example, the sensor chip 60 may be provided on the cap substrate 50 such that the side on which the yaw rate detecting part 70 is formed is opposed to the cap substrate 50. It is noted that the sensor chip 60 may be arranged such that the side on which the yaw rate detecting part 70 is formed becomes an upper side. In this case, the cap substrate 50 may be provided such that it covers the upper side of the sensor chip 60. Further, the sensor chip 60 and the control IC chip 40 are not necessarily a multi-layered construction, and they may be arranged side by side.

The sensor chip 60 may function as a yaw rate sensor installed in the vehicle, for example. In this case, the sensor chip 60 may integrally include acceleration sensors for outputting signals according to acceleration generated in the installed vehicle in a front-back direction or a lateral direction of the vehicle and a yaw rate sensor for outputting a signal according to a yaw rate generated around the center of gravity of the vehicle. In this case, the electronic component installed package 10 is configured as a sensor unit for vehicle control which has the sensor chip 60 integrally incorporated therein. In this case, the electronic component installed package 10 is mounted near the center of gravity of the vehicle (a floor tunnel, for example) with the sensor chip 60, etc., installed therein, and the sensor chip 60 detects the yaw rate and the acceleration generated at the mounted position. The detected yaw rate and the acceleration may be used for control for stabilizing vehicle behavior to prevent side slipping, etc., of the vehicle, for example.

According to the embodiment, the sensor chip 60 includes the acceleration sensors 90 and 92 in addition to the yaw rate detecting part 70. Typically, the sensor chip 60 is manufactured by a micromachining technique using a SOI (Silicon on Insulator) wafer. In this case, the acceleration sensors 90 and 92 include mass elements (oscillators) which can oscillate along a detection axis and springs. The acceleration sensors 90 and 92 are formed by MEMS (Micro Electro Mechanical Systems) as is the case with the yaw rate detecting part 70. The details of arrangements of the acceleration sensors 90 and 92 are described hereinafter.

In general, as illustrated in Fig. 2, the sensor chip 60 includes the tuning fork structured yaw rate detecting part 70 in which left and right mass elements 74a and 74b are coupled by a link spring 78. The mass elements 74a and 74b are arranged symmetrically in a X axis direction and suspended from the surface of the sensor chip substrate. The mass elements 74a and 74b are coupled to driver frames 72 via detection springs 77 which can oscillate in a Y axis direction. The driver frames 72 are coupled to fixed portions 75 (i.e., portions fixed with respect to the sensor chip substrate) via driver springs 71 which can oscillate in the X axis direction. It is noted that construction of the yaw rate detecting part 70 of the sensor chip 60 may be arbitrary as long as it has a tuning fork structure in which left and right mass elements (oscillators) are coupled by a link spring. For example, the detail of the yaw rate detecting part 70 may be configured as disclosed in JP2006-242730 A (but dumping parts can be omitted).

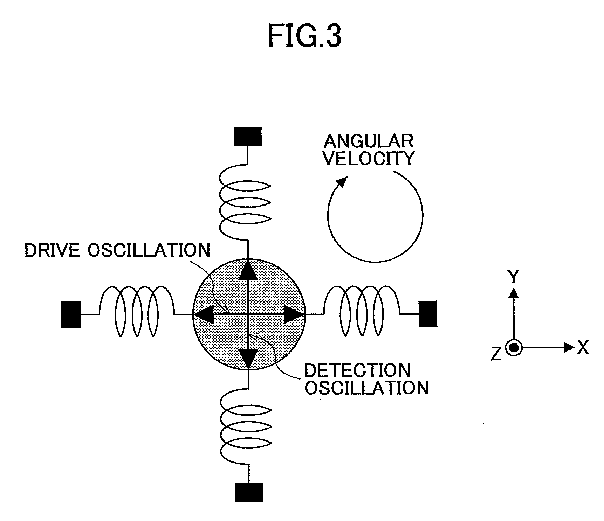

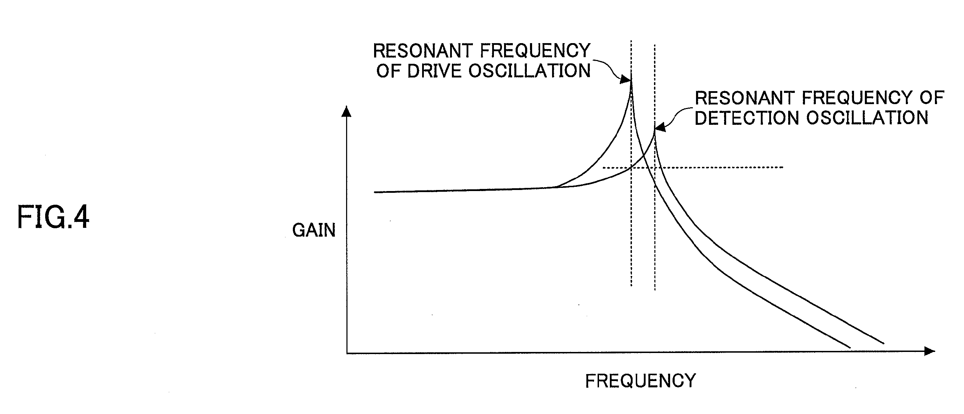

Figs. 3 and 4 are diagrams for explaining a yaw rate detection principle in the yaw rate detecting part 70. Fig. 3 illustrates a model of the yaw rate detection principle, illustrating characteristics of the mass element of the yaw rate sensor.

When the angular velocity acts in a status where the mass element is given a drive oscillation with a constant amplitude (in the X axis direction), the Coriolis force acts in a direction (i.e., Y axis direction) perpendicular to the drive oscillation direction and angular velocity rotation angle axis (i.e., the Z axis) and thus the detection oscillation is excited in the detection direction (i.e., Y axis direction). The angular velocity is detected based on the amplitude of the detection oscillation. In general, as illustrated in Fig. 4, a resonant frequency of the drive oscillation and a resonant frequency of the detection oscillation of the mass element are spaced apart by a constant amount. Further, the drive oscillation is performed at its resonant frequency. The detection oscillation is synchronized with the drive frequency, and thus the detection is performed at a frequency which is slightly apart from the resonant frequency of the detection oscillation. The higher the resonant frequency of the detection oscillation is (i.e., the higher the Q-value is) and the smaller the frequency offset is, the higher the sensor element sensitivity becomes.

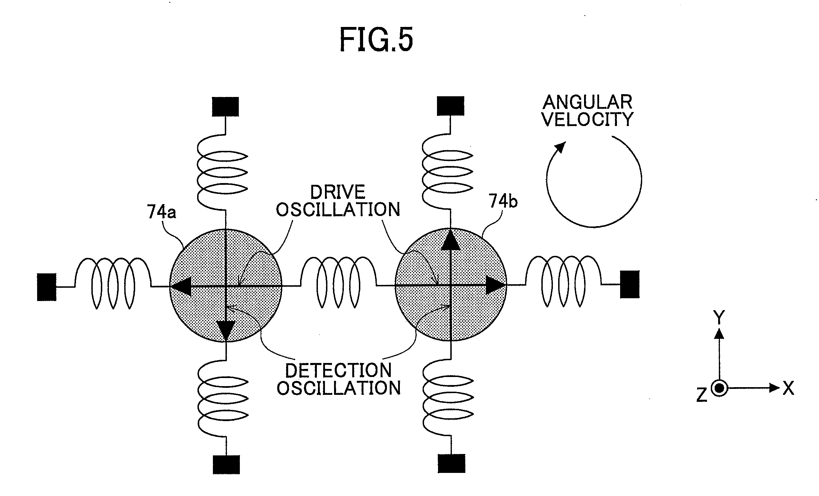

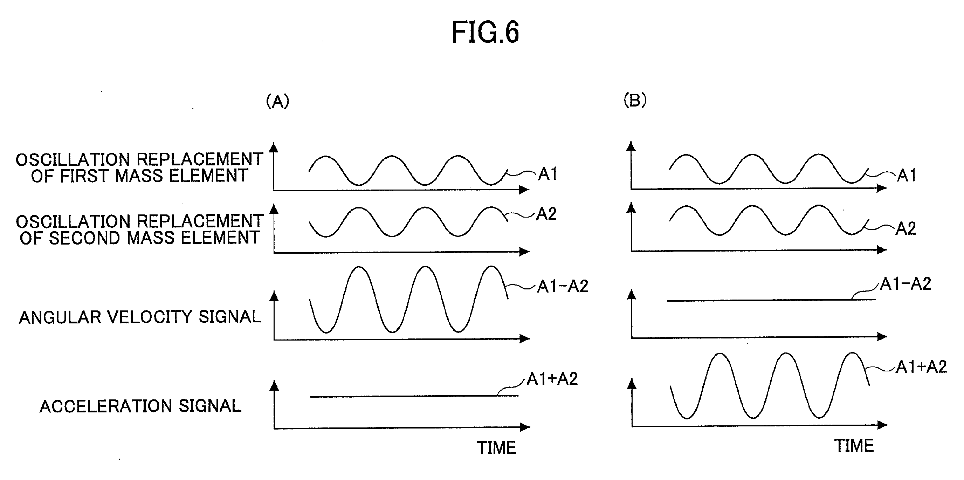

Fig. 5 is a diagram for explaining a yaw rate detection principle used in the yaw rate detecting part 70 having a tuning fork structure. Fig. 6 is a diagram in which (A) illustrates wave shapes when two mass elements 74a and 74b are oscillated symmetrically (i.e., in opposite phase) and (B) illustrates wave shapes when two mass elements 74a and 74b are oscillated in phase. In Fig. 6 (A) and (B), from the upper side, a wave shape of the oscillation displacement A1 of the first mass element 74a, a wave shape of the oscillation displacement A2 of the second mass element 74b, a wave shape of the angular velocity signal (A1-A2), and a wave shape of the acceleration (A1+A2) are illustrated.

With the tuning fork structure, the mass elements 74a and 74b are oscillated symmetrically, and thus the Coriolis force acts symmetrically (see Fig. 6 (A)). On the other hand, vehicle vibrations (except for a rotational vibration) act on the mass elements in the same direction (i.e., in phase), as illustrated in Fig. 6 (B), it is possible to distinguish the Coriolis force and the vehicle vibrations, as illustrated in Fig. 6 (A) and (B).

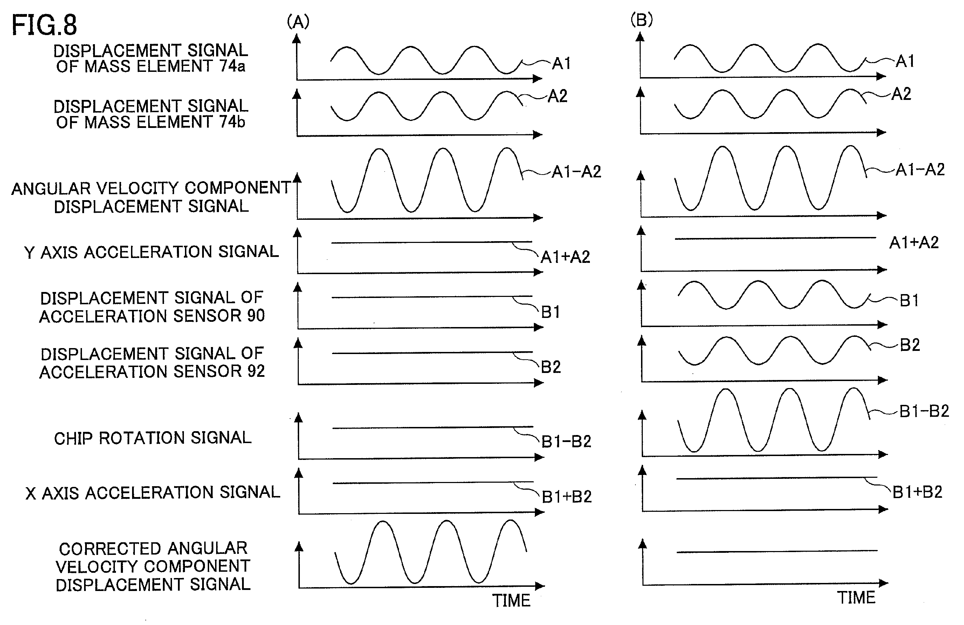

However, even with the yaw rate detecting part 70 having the tuning fork structure, if the sensor chip 60 itself is rotationally vibrated at a frequency which is the same as the drive frequency, a status is formed where the mass elements are oscillated symmetrically (oscillated to displace in opposite phase) due to the angular acceleration at that time as if the Coriolis force at the time of the generation of the angular velocity would be acting (see Fig. 6 (A) and Fig. 8), which leads to erroneous detection of the angular velocity (the decreased accuracy of the detected angular velocity).

Therefore, according to the present invention, as described in detail hereinafter, two acceleration sensors 90 and 92 are provided for detecting the rotational vibration of the sensor chip 60. With this arrangement, it is possible to appropriately prevent the erroneous detection of the angular velocity (the decreased accuracy of the detected angular velocity) based on the detection signals of the acceleration sensors 90 and 92.

In principle, the acceleration sensors 90 and 92 are disposed in such a positional relationship that the rotational vibration of the sensor chip 60 and the translational vibration of the sensor chip 60 can be distinguished based on their sensing results. In other words, the acceleration sensors 90 and 92 are disposed in such a positional relationship that the mass elements of the acceleration sensors are displaced (oscillated) in opposite phase with each other at the time of rotational vibrations of the sensor chip 60 while the mass elements of the acceleration sensors are displaced (oscillated) in phase with each other at the time of translational vibrations (i.e., at the time of vehicle vibrations except for a rotational vibration) of the sensor chip 60.

Specifically, the acceleration sensors 90 and 92 are arranged on opposite sides with respect to a reference line L, the reference line L being parallel to the detection axis X of the acceleration sensor 90 or 92 and passing through a center point G of the rotational vibration of the sensor chip 60. Further, the acceleration sensors 90 and 92 are arranged such that the detection axes of the acceleration sensors 90 and 92 don't pass through the center point G of the rotational vibration of the sensor chip 60. Further, preferably, detection directions of the acceleration sensors 90 and 92 are parallel to each other.

Here, the center point G of the rotational vibration is a center point when the sensor chip 60 is rotationally vibrated. The center point G of the rotational vibration may be designed to correspond to a gravity center of the sensor chip 60 as a single piece. Alternatively, the center point G of the rotational vibration may be designed to correspond to a gravity center of an assembly including the sensor chip 60 and the control IC chip 40 (and the cap substrate 50 if it exists). Alternatively, the center point G of the rotational vibration may correspond to an actual center point of the rotational vibration of the sensor chip 60 under a status in which the sensor chip 60 is installed in the vehicle. In this case, the center point of the rotational vibration may be determined by analyses or experiments. If there are plural center points of the rotational vibration depending on plural rotational vibration modes, the center point of the rotational vibration may be determined by targeting a desired one of the rotational vibration modes. It is noted that the center of the yaw rate detecting part 70 of the sensor chip 60 exists near the center point G of the rotational vibration; however, it is not always necessary to make the center of the yaw rate detecting part 70 of the sensor chip 60 correspond to the center point G of the rotational vibration. In other words, if the respective mass elements 74a and 74b of the yaw rate detecting part 70 and the respective detection directions (Y direction in this example) are arranged in such a relationship that they meet the same condition as the acceleration sensors 90 and 92, an angular velocity component displacement signal (difference between displacement signals of the mass elements 74a and 74b) is effected by the rotational vibration of the sensor chip 60.

In the example illustrated in Fig. 2, the detection direction of the acceleration sensor 90 is parallel to the X axis, and the reference line L passing through the center point G of the rotational vibration of the sensor chip 60 is parallel to the X axis, as illustrated in Fig. 2. At that time, another acceleration sensor 92 is disposed on an opposite side the acceleration sensor 90 with respect to the reference line L (a lower side with respect to the reference line L in Fig. 2), as illustrated in Fig. 2.

Thus, in the example illustrated in Fig. 2, the acceleration sensors 90 and 92 are displaced in opposite phase in a direction of the reference line L (i.e., the X axis) at the time of rotational vibrations of the sensor chip 60 while the acceleration sensors 90 and 92 are displaced in phase in the direction of the reference line L (i.e., the X axis) at the time of translational vibrations of the sensor chip 60. Thus, by monitoring a relationship of a phase between the detection signals of the acceleration sensors 90 and 92, the rotational vibration of the sensor chip 60 can be monitored.

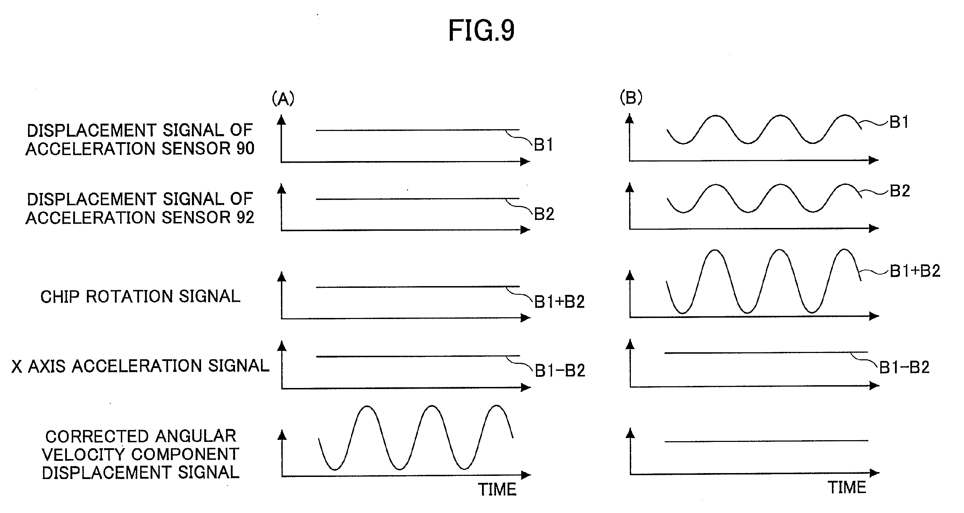

In particular, in the example illustrated in Fig. 2, the acceleration sensors 90 and 92 are arranged in such a relationship that they can sense acceleration components in opposite phase, which have the same magnitude, at the time of the rotational vibration of the sensor chip 60. Specifically, the acceleration sensors 90 and 92 are arranged symmetrically with respect to the center point G of the rotational vibration of the sensor chip 60. Thus, the acceleration sensors 90 and 92 are displaced in opposite phase in a direction of the reference line L with the same magnitude at the time of rotational vibrations of the sensor chip 60 while the acceleration sensors 90 and 92 are displaced in phase in the direction of the reference line L with the same magnitude at the time of translational vibrations of the sensor chip 60. Therefore, in this case, it is possible to retrieve a signal (a chip rotation signal) representing the rotational vibration of the sensor chip 60 by taking a differential between the detection signals of the acceleration sensors 90 and 92. It is noted that in order to prevent complexity of the explanation, it is assumed herein that the acceleration sensors 90 and 92 have the same polarity unless otherwise specified; however, the acceleration sensors 90 and 92 may have opposite polarities. In this case, it is possible to retrieve a signal (a chip rotation signal) representing the rotational vibration of the sensor chip 60 by summing the detection signals of the acceleration sensors 90 and 92 (see Fig. 9).

Reference positions of the acceleration sensors 90 and 92 for the point symmetry correspond to positions of the mass elements (not illustrated) of acceleration sensors 90 and 92. In other words, vibration center positions (nominal positions) of the mass elements of the acceleration sensors 90 and 92 are arranged symmetrically with respect to the center point G of the rotational vibration.

It is noted that in the example illustrated in Fig. 2 the acceleration sensors 90 and 92 are arranged symmetrically with respect to the center point G of the rotational vibration of the sensor chip 60; however, distances from the center point G of the rotational vibration of the sensor chip 60 to the acceleration sensors 90 and 92 are not necessarily the same in terms of a principle.

Fig. 7 is a block diagram of an example of the angular velocity detecting apparatus 1 which includes the sensor chip 60 illustrated in Fig. 2.

The control IC chip 40 includes a sensor excitation driving part 42 and a displacement detecting part 43 coupled to the respective mass elements 74a and 74b of the yaw rate detecting part 70; a angular velocity signal processing part 44; a Y axis acceleration signal processing part 45; a displacement detecting part 46 connected to the respective mass elements 90a and 92a of the acceleration sensors 90 and 92; a chip rotation detection signal processing part 47; and a X axis acceleration signal processing part 48.

The sensor excitation driving part 42 supplies excitation drive signals to driver electrodes of the mass elements 74a and 74b for exciting the drive oscillation of the mass elements 74a and 74b of the yaw rate detecting part 70 in the X axis direction, and receives excitation drive monitor signals which represent statuses of the drive oscillation of the mass elements 74a and 74b in the X axis direction. The displacement detecting part 43 receives the respective displacement signals according to the displacements of the mass elements 74a and 74b in the Y axis direction, and supplies the received displacement signals, which represent the respective displacement of the mass elements 74a and 74b in the Y axis direction, to the angular velocity signal processing part 44 and the Y axis acceleration signal processing part 45. The Y axis acceleration signal processing part 45 includes an adder to which the respective displacement signals associated with the mass elements 74a and 74b are input from the displacement detecting part 43. The Y axis acceleration signal processing part 45 sums these displacement signals to generate an acceleration component displacement signal which represents the acceleration component of the mass elements 74a and 74b in the Y axis direction. The acceleration component displacement signal thus generated is utilized as a signal (Y axis acceleration signal) representing acceleration in the Y axis direction.

The displacement detecting part 46 receives the respective displacement signals according to the displacements of the mass elements 90a and 92a of the acceleration sensors 90 and 92 in the X axis direction, and supplies the received displacement signals, which represent the respective displacement of the mass elements 90a and 92a in the X axis direction, to the chip rotation detection signal processing part 47 and the X axis acceleration signal processing part 48. The X axis acceleration signal processing part 48 includes an adder to which the respective displacement signals associated with the mass elements 90a and 92a are input from the displacement detecting part 46. The X axis acceleration signal processing part 48 sums these displacement signals to generate an acceleration component displacement signal which represents the acceleration component of the mass elements 90a and 92a in the X axis direction. The acceleration component displacement signal thus generated is utilized as a signal (X axis acceleration signal) representing acceleration in the X axis direction. Thus, it is possible to detect the accelerations in two axes based on the Y axis acceleration signal and the X axis acceleration signal.

The chip rotation detection signal processing part 47 includes a subtractor to which the respective displacement signals associated with the mass elements 90a and 92a are input from the displacement detecting part 46. The chip rotation detection signal processing part 47 takes a differential between these displacement signals to generate a signal (a chip rotation signal) which represents the rotational vibration of the sensor chip 60. The chip rotation signal thus generated is supplied to the angular velocity signal processing part 44.

The angular velocity signal processing part 44 includes a first subtractor to which the respective displacement signals associated with the mass elements 90a and 92a are input from the displacement detecting part 46; and a second subtractor to which output signal from the first subtractor and the chip rotation signal from the chip rotation detection signal processing part 47 are input. Thus, the angular velocity signal processing part 44 generates a signal (an angular velocity component displacement signal) which represents the differential between the displacement signals associated with the mass elements 90a and 92a from the displacement detecting part 46, and generates a corrected angular velocity component displacement signal by subtracting the chip rotation signal from the angular velocity component displacement signal. The corrected angular velocity component displacement signal thus generated is utilized as a signal (an angular velocity signal) representing the angular velocity around the Z axis.

Fig. 8 is a diagram for illustrating wave shapes of signals generated in the angular velocity detecting apparatus 1 illustrated in Fig. 7 in which a left side (A) in the diagram illustrates the respective signal wave shape in the case where the angular velocity is generated and a right side (B) in the diagram illustrates the respective signal wave shape in the case where the sensor chip 60 is rotationally vibrated. In Fig. 8 (A) and (B), from the upper side, a time series wave shape of the displacement signal A1 of the mass element 74a of the yaw rate detecting part 70; a time series wave shape of the displacement signal A2 of the mass element 74b of the yaw rate detecting part 70; a time series wave shape of the angular velocity component displacement signal (A1-A2); a time series wave shape of the Y axis acceleration signal (A1+A2); a time series wave shape of the displacement signal B1 of the mass element 90a of the acceleration sensor 90; a time series wave shape of the displacement signal B2 of the mass element 92a of the acceleration sensor 92; a time series wave shape of the chip rotation signal (B1-B2); a time series wave shape of the X axis acceleration signal (B1+B2); and a time series wave shape of the angular velocity signal (the corrected angular velocity component displacement signal) (=(A1-A2)-(B1-B2)) are illustrated, respectively.

As illustrated in Fig. 8 (A), if the angular velocity to be detected is generated, the displacement signals B1 and B2 of the acceleration sensors 90 and 92 are substantially the same, and thus the angular velocity signal (the corrected angular velocity component displacement signal) is substantially the same as the angular velocity component displacement signal (A1-A2). Therefore, if the angular velocity to be detected is generated, the displacement signals of the acceleration sensors 90 and 92 have substantially no influence on the angular velocity component displacement signal from the yaw rate detecting part 70.

As illustrated in Fig. 8 (B), if the rotational vibration of the sensor chip 60, which is not a target to be detected, is generated, a status is formed where the mass elements 90a and 92a are oscillated symmetrically (oscillated to displace in opposite phase) due to the angular acceleration at that time as if the Coriolis force would be acting. In other words, as is apparent when Fig. 8 (A) is put in contrast with (B), even if the sensor chip 60 is rotationally vibrated, the displacement signals A1 and A2 are generated as is the case where the angular velocity to be detected is generated. In this way, if the rotational vibration of the sensor chip 60 is generated, the angular velocity component displacement signal, which should be zero, is not zero, having a wave shape representing the generation of the angular velocity. This angular velocity component displacement signal should not be used as it is since it does not represent the angular velocity to be detected. In this connection, according to the embodiment, this angular velocity component displacement signal is corrected (=(A1-A2)-(B1-B2)) by the chip rotation signal to generate the angular velocity signal (the corrected angular velocity component displacement signal). The corrected angular velocity signal is substantially zero, as illustrated in Fig. 8 (B). In this way, according to the embodiment, even if the rotational vibration of the sensor chip 60, which is not a target to be detected, is generated, it is possible to generate the angular velocity signal which represents, with high accuracy, the angular velocity to be detected.

It is noted that in the embodiment, the angular velocity component displacement signal (A1-A2) and the chip rotation signal (B1-B2) are generated ,and then the angular velocity signal (the corrected angular velocity component displacement signal) is generated by subtracting the chip rotation signal (B1-B2) from the angular velocity component displacement signal (A1-A2); however, there are various equivalent ways of obtaining the same angular velocity signal. For example, a signal (A1-B1) and a signal (A2-B2) may be generated, and then the angular velocity signal (the corrected angular velocity component displacement signal) may be generated by subtracting the signal (A2-B2) from the signal (A1-B1).

Further, in the embodiment, since the distances from the acceleration sensors 90 and 92 of the sensor chip 60 to the center point G of the rotational vibration are the same, the chip rotation signal is derived by merely calculating (B1-B2); however, if the distances from the acceleration sensors 90 and 92 of the sensor chip 60 to the center point G of the rotational vibration are different, the chip rotation signal is derived by calculating (B1-K1×B2). K1 is a constant which is set based on a ratio between the respective distances from the acceleration sensors 90 and 92 of the sensor chip 60 to the center point G of the rotational vibration. Further, from a similar point of view, the corrected angular velocity component displacement signal may be derived by calculating (A1-A2)-K2×(B1-K1×B2). K2 is a constant which is set based on a ratio between a distance from the acceleration sensor 90 of the sensor chip 60 to the center point G of the rotational vibration and a distance from the mass element 74a or 74b of the yaw rate detecting part 70 to the center point G of the rotational vibration (assuming that the distances from the mass element 74a and 74b to the center point G are the same).

Fig. 9 is a diagram for illustrating wave shapes of signals generated in the angular velocity detecting apparatus 1 in which the acceleration sensors 90 and 92 have opposite polarities. In Fig. 9, a left side (A) in the diagram illustrates the respective signal wave shape in the case where the angular velocity is generated and a right side (B) in the diagram illustrates the respective signal wave shape in the case where the sensor chip 60 is rotationally vibrated. In other words, in Fig. 9, as opposed to Fig. 8 (which is related to the opposite polarities having the same polarity), the wave shapes of signals in case of the acceleration sensors 90 and 92 having opposite polarities (i.e., the detection axes of the acceleration sensors 90 and 92 have opposite positive and negative directions) are illustrated.

In this case, as described above, it is possible to retrieve the chip rotation signal (B1+B2) by summing the replacement signals B1 and B2 of the acceleration sensors 90 and 92. Then, the angular velocity signal (=(A1-A2)-(B1+B2)), which is the corrected angular velocity component displacement signal, can be obtained by subtracting the chip rotation signal (B1+B2) from the angular velocity component displacement signal (A1-A2) from the yaw rate detecting part 70. It is noted that the constant K1 or K2 may be used as is the case where the acceleration sensors 90 and 92 have the same polarity.

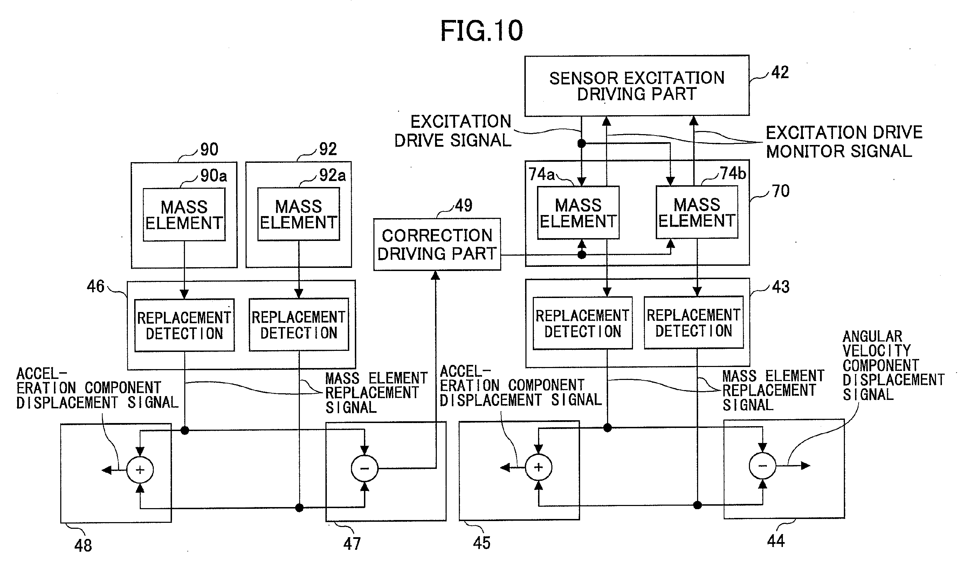

Fig. 10 is a block diagram of another example of the angular velocity detecting apparatus 1. The example illustrated in Fig. 10 differs from the example illustrated in Fig. 7 mainly in a configuration of the angular velocity signal processing part 44 and in that it includes a correction driving part 49. In the following, configurations unique to the example illustrated in Fig. 10 are mainly described, and other configurations may be the same as those in the example illustrated in Fig. 7.

The angular velocity signal processing part 44 includes a subtractor to which the respective displacement signals associated with the mass elements 90a and 92a are input from the displacement detecting part 46. The angular velocity signal processing part 44 generates a signal (the angular velocity component displacement signal) which represents a differential between these displacement signals associated with the mass elements 90a and 92a. The angular velocity component displacement signal thus generated is utilized as a signal (the angular velocity signal) representing the angular velocity around the Z axis.

The chip rotation detection signal processing part 47 includes a subtractor to which the respective displacement signals associated with the mass elements 90a and 92a are input from the displacement detecting part 46. The chip rotation detection signal processing part 47 takes a differential between these displacement signals to generate a signal (a chip rotation signal) which represents the rotational vibration of the sensor chip 60. The chip rotation signal thus generated is supplied to the correction driving part 49.

The correction driving part 49 drives, based on the chip rotation signal, the respective mass elements 74a and 74b of the yaw rate detecting part 70 in the Y axis direction such that the displacement components due to the rotational vibration of the sensor chip 60 disappear. This driving method may be implemented utilizing an electrostatic force (electrodes), a piezoelectric element, an electromagnetic force, etc.

For example, in the case of using the electrostatic force, the yaw rate detecting part 70 of the sensor chip 60 includes driver electrodes for driving the mass elements 74a and 74b in the Y axis direction. The driver electrodes may be implemented by servo electrodes, which are used for an ordinary servo detection function, for example, and if there are no such servo electrodes, electrodes having the same configuration may be newly provided. Further, the driver electrodes may be provided in addition to the servo electrodes. Constructions of the driver electrodes and their relevant configurations are arbitrary. For example, they may be the same as constructions of damping electrodes and their relevant configurations as disclosed in JP2009-47649 A.

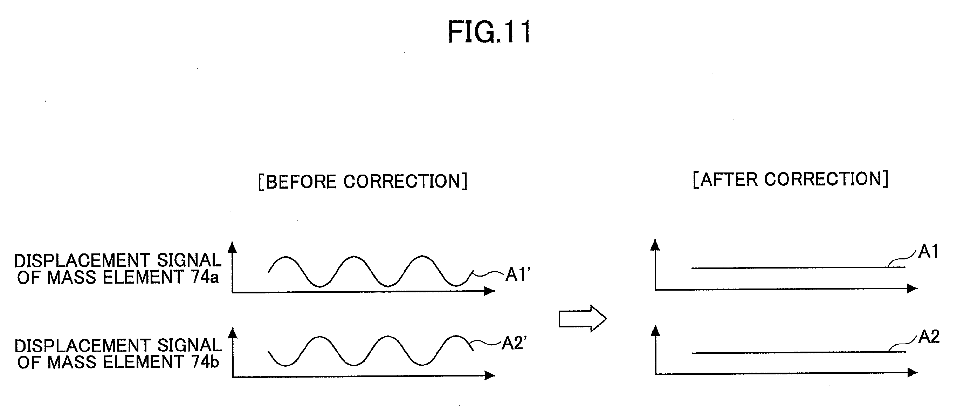

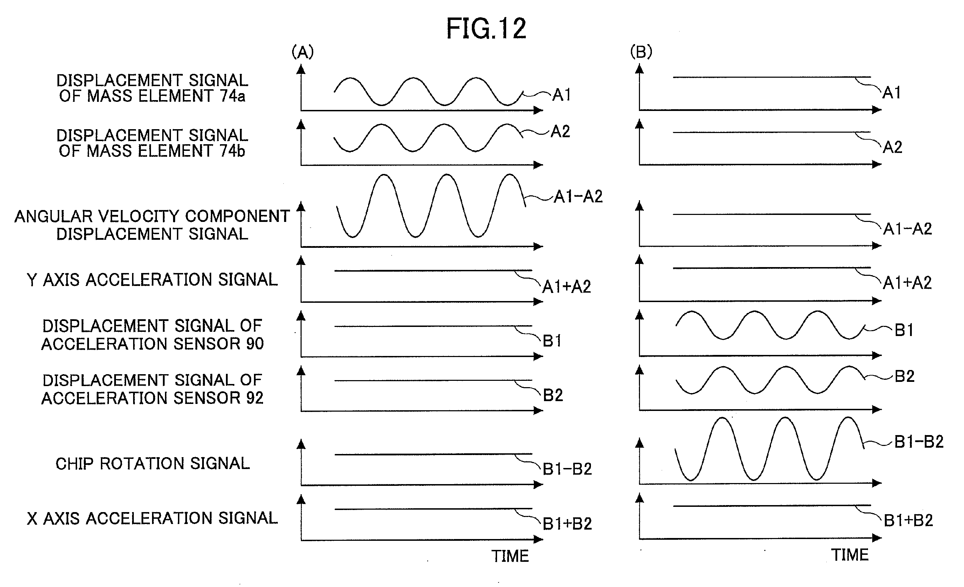

Fig. 11 is a diagram for illustrating displacement signals of the mass elements 74a and 74b before and after correction by the correction driving part 49. Fig. 12 is a diagram for illustrating wave shapes of signals generated in the angular velocity detecting apparatus 1 illustrated in Fig. 7 in which a left side (A) in the diagram illustrates the respective signal wave shapes in the case where the angular velocity is generated and a right side (B) in the diagram illustrates the respective signal wave shapes in the case where the sensor chip 60 is rotationally vibrated.

In Fig. 12 (A) and (B), from the upper side, a time series wave shape of the displacement signal A1 of the mass element 74a of the yaw rate detecting part 70; a time series wave shape of the displacement signal A2 of the mass element 74b of the yaw rate detecting part 70; a time series wave shape of the angular velocity component displacement signal (A1-A2); a time series wave shape of the Y axis acceleration signal (A1+A2); a time series wave shape of the displacement signal B1 of the mass element 90a of the acceleration sensor 90; a time series wave shape of the displacement signal B2 of the mass element 92a of the acceleration sensor 92; a time series wave shape of the chip rotation signal (B1-B2); and a time series wave shape of the X axis acceleration signal (B1+B2) are illustrated, respectively.

The correction driving part 49 generates, based on the chip rotation signal (B1-B2) (see Fig. 12), correction driver signals such that the displacement components due to the rotational vibration of the sensor chip 60 disappear, and supplies the generated correction driver signals to the mass elements 74a and 74b. For example, the correction driver signal C1 for the mass element 74a may be generated as C1=αl×(B1-B2), and the correction driver signal C2 for the mass element 74b may be generated as C2=-α2×(B1-B2). α1 and α2 are constants which are adapted such that (A1'-C1) and (A2'-C2) become zero, respectively. A1' and A2' are the uncorrected replacement signals (i.e., before the correction) associated with the mass elements 74a and 74b, as illustrated in Fig. 11. Thus, even if the rotational vibration of the sensor chip 60 is generated, the corrected replacement signals associated with the mass elements 74a and 74b become substantially zero, as illustrated in Fig. 11 and 12. In other words, the displacement components due to the rotational vibration of the sensor chip 60 are removed. In this way, according to the embodiment, even if the rotational vibration of the sensor chip 60 is generated, it is possible to generate the angular velocity signal which represents, with high accuracy, the angular velocity to be detected.

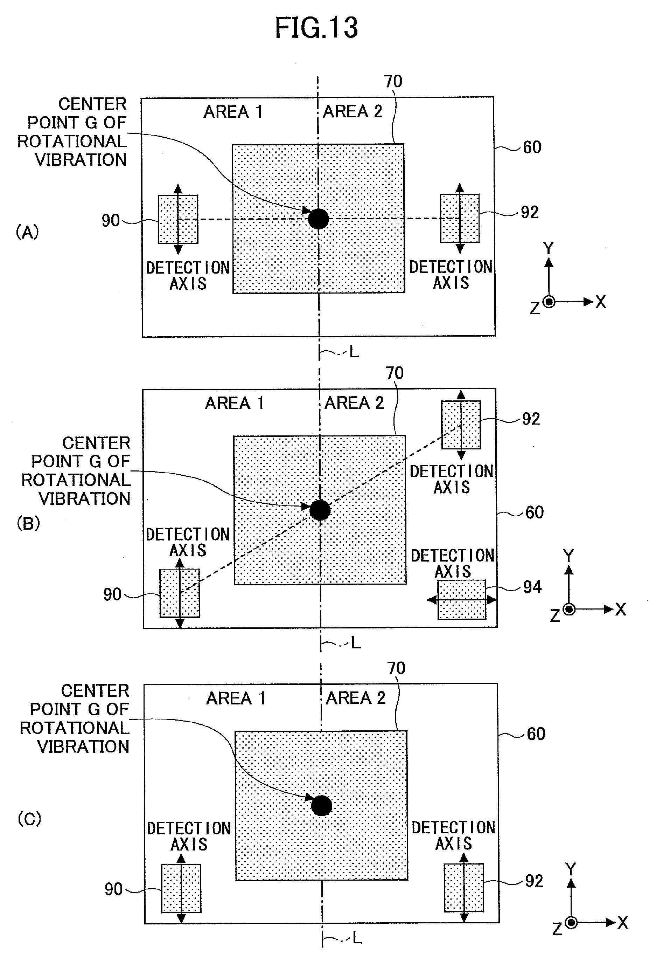

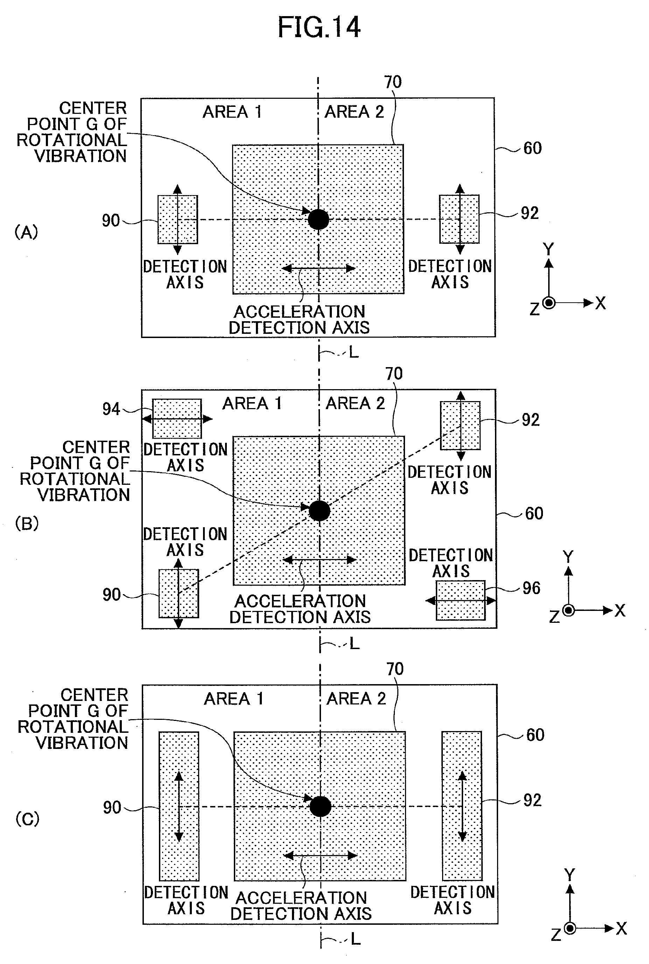

Next, with reference to Figs. 13 and 14, variations in arrangement of the acceleration sensors 90 and 92 (and a third acceleration sensor, etc.) in the sensor chip 60 are described.

As described above, it is desirable that the acceleration sensors 90 and 92 are arranged such that the following criteria are met. The detection axes of the acceleration sensors 90 and 92 do not pass through the center point G of the rotational vibration of the sensor chip 60; the detection direction of the acceleration sensors 90 and 92 are parallel to each other; and the acceleration sensors 90 and 92 are located on opposite sides with respect to the reference line L (see an area 1 or an area 2 in Fig. 13, etc.). It is noted that the reference line L is parallel to the detection axes of the acceleration sensors 90 and 92 and passes through the center point G of the rotational vibration of the sensor chip 60, as described above.

There are many variations of the acceleration sensors 90 and 92 which meet such criteria. Therefore, in the following, only the representative variations are described.

Fig. 13 is a diagram for illustrating variations in which the yaw rate detecting part 70 of the sensor chip 60 does not have an acceleration detecting function (i.e., the yaw rate detecting part 70 has only the yaw rate detecting function).

The acceleration sensors 90 and 92 may be arranged symmetrically with respect to the center point G of the rotational vibration and symmetrically with respect to the reference line L, as illustrated in Fig. 13 (A). Further, the acceleration sensors 90 and 92 may be arranged symmetrically with respect to the center point G of the rotational vibration, as illustrated in Fig. 13 (B). Further, the acceleration sensors 90 and 92 may be arranged symmetrically with respect to the reference line L, as illustrated in Fig. 13 (C).

It is noted that in the examples illustrated in Fig. 13, the detection directions of the acceleration sensors 90 and 92 are parallel to the Y axis direction; however, they may be inclined with respect to the Y axis direction. In terms of enhancing the detection sensitivity for the rotational vibration, it is desirable that the detection directions of the acceleration sensors 90 and 92 form an angle of 45 degrees through 90 degrees with a line passing through (the mass elements of) the acceleration sensors 90 and 92 and the center point G of the rotational vibration. It is noted that if the detection directions of the acceleration sensors 90 and 92 form an angle of 90 degrees with the line passing through (the mass elements of) the acceleration sensors 90 and 92 and the center point G of the rotational vibration, the detection sensitivity for the rotational vibration becomes maximum. However, in principle, the angle which the detection directions of the acceleration sensors 90 and 92 form with the line passing through (the mass elements of) the acceleration sensors 90 and 92 and the center point G of the rotational vibration may be more than 0 degrees. On the other hand, it may be a practical option that the directions of the acceleration sensors 90 and 92 are set to be parallel to directions in which accelerations are desired to be detected. However, such a configuration is also contemplated that the detection signals of the acceleration sensors 90 and 92 are utilized only for the angular velocity correction process described above. Further, the detection directions of the acceleration sensors 90 and 92 are not necessarily parallel to the detection direction (i.e., the detection oscillation direction) of the yaw rate detecting part 70.

It is noted that it is also possible to optionally provide a third acceleration sensor 94 in addition to the acceleration sensors 90 and 92, as illustrated in Fig. 13 (B). In this case, the third acceleration sensor 94 may have a detection direction perpendicular to the detection directions of the acceleration sensors 90 and 92. In this case, the detection of the acceleration in two axes becomes possible. It is noted that the third acceleration sensor 94 may be provided in the configuration illustrated in Fig. 13 (A) or Fig. 13 (C).

Fig. 14 is a diagram for illustrating variations in which the yaw rate detecting part 70 of the sensor chip 60 has an acceleration detecting function (i.e., the yaw rate detecting part 70 is an integral sensor of a single-axis yaw rate sensor and single-axis acceleration sensor, as is the case with the example illustrated in Fig. 2, etc.). In the example illustrated in Fig. 14, the acceleration detection direction of the yaw rate detecting part 70 corresponds to the X axis direction.

The acceleration sensors 90 and 92 may be arranged symmetrically with respect to the center point G of the rotational vibration and symmetrically with respect to the reference line L, as illustrated in Fig. 14 (A). Further, the acceleration sensors 90 and 92 may be arranged symmetrically with respect to the center point G of the rotational vibration, as illustrated in Fig. 14 (B). Further, the acceleration sensors 90 and 92 may be configured to have the same length (in the Y axis direction) as the yaw rate detecting part 70, and may be arranged side by side with respect to the yaw rate detecting part 70, as illustrated in Fig. 14 (C). In the example illustrated in Fig. 14 (C), since a change amount of capacitance of the detection electrodes at the time of the displacement of the mass elements of the acceleration sensors 90 and 92 becomes larger, the detection accuracy is increased.

In the examples illustrated in Fig. 14, the detection directions of the acceleration sensors 90 and 92 are perpendicular to the acceleration detection direction of the yaw rate detecting part 70. Thus, the detection of the acceleration in two axes becomes possible. Further, it is also possible to optionally provide a third acceleration sensor 94 and a fourth acceleration sensor 96 in addition to the acceleration sensors 90 and 92, as illustrated in Fig. 14 (B). In this case, the third acceleration sensor 94 and the fourth acceleration sensor 96 may have detection directions perpendicular to the detection directions of the acceleration sensors 90 and 92. In this case, the detection of the acceleration in two axes becomes redundant. It is noted that the third acceleration sensor 94 and the fourth acceleration sensor 96 may be provided in the configuration illustrated in Fig. 14 (A) or Fig. 14 (C),

Further, in the examples illustrated in Fig. 14, the detection directions of the acceleration sensors 90 and 92 are parallel to the Y axis direction; however, they may be inclined with respect to the Y axis direction. In terms of enhancing the detection sensitivity for the rotational vibration, it is desirable that the detection directions of the acceleration sensors 90 and 92 form an angle of 45 degrees through 90 degrees with a line passing through (the mass elements of) the acceleration sensors 90 and 92 and the center point G of the rotational vibration. It is noted that if the detection directions of the acceleration sensors 90 and 92 form an angle of 90 degrees with the line passing through (the mass elements of) the acceleration sensors 90 and 92 and the center point G of the rotational vibration, the detection sensitivity for the rotational vibration becomes maximum (see Fig. 2 and Fig. 14(A)). However, in principle, the angle which the detection directions of the acceleration sensors 90 and 92 form with the line passing through (the mass elements of) the acceleration sensors 90 and 92 and the center point G of the rotational vibration may be more than 0 degrees. On the other hand, it may be a practical option that the directions of the acceleration sensors 90 and 92 are set to be parallel to directions in which accelerations are desired to be detected. Further, the detection directions of the acceleration sensors 90 and 92 are not necessarily parallel to the detection direction (i.e., the detection oscillation direction) of the yaw rate detecting part 70.

The present invention is disclosed with reference to the preferred embodiments. However, it should be understood that the present invention is not limited to the above-described embodiments, and variations and modifications may be made without departing from the scope of the present invention.

For example, above-described embodiments are related to a case in which the present invention is applied to the vehicle; however, the present invention can be effectively applied to angular velocity detecting apparatuses installed in aircrafts, marine vessels, etc.

## Claims

1. An angular velocity detecting apparatus which includes a sensor chip having an angular velocity sensor installed therein, wherein the angular velocity sensor includes two mass elements which are driven in a drive direction in opposite phase with each other, and detects an angular velocity based on an oscillation of the mass elements in a direction perpendicular to the drive direction, the angular velocity detecting apparatus comprising:
two acceleration sensors provided on the sensor chip, each of the acceleration sensors having a mass element which can oscillate in a single axis direction in a plane parallel to a substrate surface of the sensor chip, wherein the acceleration sensors are arranged in such a positional relationship that the mass elements of the acceleration sensors are oscillated in opposite phase with each other at the time of a rotational vibration of the sensor chip while the mass elements of the acceleration sensors are oscillated in phase with each other at the time of a translational vibration of the sensor chip.

2. The angular velocity detecting apparatus of claim 1, wherein detection axes of the acceleration sensors don't pass through a center point of the rotational vibration of the sensor chip and are parallel to each other, and
the acceleration sensors are arranged on opposite sides with respect to a reference line, the reference line being parallel to the detection axes of the acceleration sensors and passing through the center point of the rotational vibration of the sensor chip.

3. The angular velocity detecting apparatus of claim 2, wherein the acceleration sensors are arranged symmetrically with respect to the center point of the rotational vibration of the sensor chip, or are arranged symmetrically with respect to the reference line.

4. The angular velocity detecting apparatus of any one of claims 1-3, further comprising a rotational vibration component removing part configured to remove, based on output signals of the acceleration sensors, a component due to the rotational vibration of the sensor chip in an output signal of the angular velocity sensor.

5. The angular velocity detecting apparatus of claim 4, wherein the rotational vibration component removing part generates a chip rotation signal representing the rotational vibration of the sensor chip based on the output signals of the acceleration sensors, and subtracts the chip rotation signal from the output signal of the angular velocity sensor.

6. The angular velocity detecting apparatus of claim 4, wherein the rotational vibration component removing part generates a chip rotation signal representing the rotational vibration of the sensor chip based on the output signals of the acceleration sensors, and applies forces to the mass elements of the acceleration sensors in such a direction as to reduce an oscillation due to the rotational vibration of the sensor chip.

7. The angular velocity detecting apparatus of any one of claims 1-6, wherein the detection axes of the acceleration sensors are parallel to the drive direction of the angular velocity sensor.
